# EUROPEAN PATENT APPLICATION

(11) **EP 1 004 560 A2**
(43) Date of publication of application: **31.05.2000**
(21) Application number: 99123325.5
(22) Date of filing: 23.11.1999
(51) Int. Cl.: C05G 5/00, C05D 9/02, C05G 3/08, C05F 11/00

(54) **Liquid fertiliser**

(30) Priority: 23.11.1998 DK 153198
(71) Applicant: Andersen, Anne Skovbo, 8990 Färup (DK)
(72) Inventor: Andersen, Anne Skovbo, 8990 Färup (DK)
(74) Representative: Holme, Edvard

(57) **Abstract**

An aqueous solution which has a content of at least one juice from at least one part of a plant serves for dissolve at least one inorganic component for manufacturing a liquid fertiliser that acts quicker, for a longer time and better than known so far, and that can be manufactured quickly and inexpensively on small production plants near the consumer.

## Description

The invention relates to a fertiliser of the kind that consists of an aqueous solution of at least one inorganic component.

Both solid and liquid fertilisers for many different purposes are known.

Solid fertilisers, e.g. with fertiliser grains in form of pellets or granulates, are manufactured in relatively large production plants. The production of solid fertiliser requires a disproportionately amount of energy.

The finished solid fertiliser must be kept under dry conditions in central warehouses to avoid swelling and breaking of the fertiliser grains which result in loss of nutrients. When the fertiliser is dry again, the fertiliser grains will conglomerate inexpediently, and the fertiliser can therefore not be spread in an intentional, simple manner on e.g. a field. In some cases, the fertiliser must therefore be discarded resulting in an economical loss to the producer.

It is also difficult to spread solid fertiliser in a uniform layer as a uniform spreading is essentially contingent on conditions such as wind velocity, air humidity, and the rate of the fertiliser distributor.

It is a known problem that a non-uniform spreading of solid fertiliser leads to overfertilising of some areas. The nitrogen concentration can thus locally be so high that the plants cannot absorb all the nitrogen which result in nitrogen seepage to the groundwater. At the same time, other areas are underfertilised, the consequence of which is negative influence on plant growth.

To ensure that also the borders of the field are fertilised during spreading, it can be necessary to drive so close to the borders that fertiliser is also added to e.g. the ditches and neighbouring streams. An unnecessary large quantity of fertiliser is therefore used for fertilising a selected area.

Use of solid fertiliser therefore adds considerable larger fertiliser quantities to the biosphere than expediently for preservation of a natural environment.

Contrary to solid fertilisers, liquid fertilisers can quickly be manufactured on small production plants. Such a production plant can quickly and simply be switched to manufacturing liquid fertiliser according to several different recipes.

The quick manufacturing process also means that the need for storage capacity is small. To this should be added that storage always will be in closed tanks so that a loss in the important fertilising components of the liquid fertiliser is completely avoided.

Liquid fertiliser can typically be distributed by means of a field sprayer with special nozzles. The spreading takes place near the ground surface, and the fertiliser is therefore distributed uniformly.

The spreading of liquid fertiliser can be controlled with unusually great accuracy irrespective of rain and wind velocities. The liquid fertiliser can therefore be distributed on the wanted area in such a way that individual areas are not over- or underfertilised, or that fertiliser is not added to areas where fertilising is not allowed or not intended.

Today, new technology in form of Global Positioning System (GPS) makes it possible to add liquid fertiliser to e.g. a small, limited area where the crop or growth need a specific composition of the fertiliser.

German Patent No. DE 196 35 783 C1 discloses a dry, solid fertiliser made on the basis of potato juice.

The invention according to the German patent is a long-acting solid fertiliser. The nitrogen content of the fertiliser is described solely as being organic nitrogen manufactured by heat treating potato juice so that both insoluble and soluble proteins are denaturated after which all the protein is subsequently separated from the aqueous phase and gathered.

The residual aqueous phase according to the German patent can be concentrated whereby another solid substance with an unspecified composition is manufactured.

The invention according to the German patent opens up the possibility of e.g. mixing the manufactured, organic protein with the solid substance made by concentrating the aqueous phase, or e.g. mixing the organic protein with a herbicide.

Manufacturing of fertiliser according to this German invention is both difficult, expensive and slow. The manufacturing process requires large production plants, and the solid fertiliser has the above known disadvantages of solid fertilisers.

Another disadvantage of the German invention is that it only contains a nitrogen source in form of protein. This means that the nitrogen content of the fertiliser only slowly will be available to the bacterial flora of the soil, and the fertiliser is therefore unsuitable when the plants have acute fertiliser needs that must be met. In areas with a very small bacterial flora, the risk exists that such a fertiliser will have no effect at all, and in areas with little precipitation, the nitrogen from proteins can only percolate into the soil slowly without irrigation which results is a further reduction in the decomposition rate.

There is thus a need for a fertiliser which quickly can meet the plants' need for nutrients and which on a long view, is able to slowly liberate the nitrogen content of the soil.

The object of the invention is to provide a liquid fertiliser of the kind mentioned in the opening paragraph that can be manufactured quickly and inexpensively on small production plants near the consumer and that works quicker, for a longer time and better than known so far.

The novel and unique features according to the invention, whereby this is achieved, is the fact that the aqueous solution has a content of at least one juice from at least one part of a plant.

The aqueous solution is in this simple and inexpensive manner advantageously given a content of plant nutrients depending on the individual type of juice.

By letting the aqueous solution be a mixture of different types of juice, the individual characteristics and compositions of these juices can be utilised advantageously.

Bacteria in the soil are found in large numbers near the rhizosphere where there from the root zone of the plants is liberated e.g. sugars and amino acids that are necessary nourishment to the bacterial flora near the root zone.

In this way, the plants sees to feed and subsist the bacterial flora necessary to liberate the nutrient content of the soil that are essential and not very accessible to the plant growth, such as phosphorous and nitrogen.

By dissolving the content of the fertiliser of inorganic component in a juice with a content of carbohydrates, the natural carbohydrate production of the plants can advantageously be supplemented with a carbon source so that the bacterial flora in the soil obtains favourable reproduction conditions.

A more rapid reproduction of nitrogen fixing bacteria, that is bacteria that can reduce the nitrogen content of the air to ammonia, can for example mean that the biologically nitrogen content of the soil, quickly can be increased so that the nitrogen always is found in sufficient quantities to give the plants optimum growth conditions.

That sufficient quantities of carbohydrates are important is stressed by the fact that fungi in the soil become inactive at glucose deficiency. In many cases, the plants can only produce so small quantities of glucose that the fungus lacks energy to convert very inaccessible, humus-like matters in the soil and thereby to liberate the nitrogen and phosphorous content of these humus-like matters so that it can be used by the plants.

By using different juices with different carbohydrate contents, carbohydrate compositions, and pH values, liquid fertiliser can, without comprehensive manufacturing processes, be made that contains natural sugar compositions which, in a favourable manner, can supplement the natural carbohydrate production of the plants.

When potato juice is used, the plants can simply be added carbohydrate in form of starch and glucose. Potato juice furthermore possesses unique qualities as solvent for urea and inorganic components in the liquid fertiliser.

Where only a quite small part of the used fruit juice is molasses from sugar beets or sugar canes, the plants can simply be added relatively large quantities of carbohydrate in form of sucrose.

If a liquid fertiliser with a low pH value is wanted, apple juice can advantageously be used as fruit juice.

In case that the fruit juice has a carbohydrate content which is lower than what is required for making a specific, liquid fertiliser composition according to the invention, the liquid fertiliser can furthermore be added a supplement of carbohydrates and thereby ensure that the liquid fertiliser has a sufficient carbohydrate content.

By also mixing the fruit juice with at least one inorganic component or chemical compound containing at least one element chosen among N, P, K, Zn, S, Mg, Na, Ca, Mn, Cu, B, Fe, Co, and Mo, a liquid fertiliser can be manufactured with a content of micro- and macronutrients as well as tracers in concentrations that are necessary to the growth of the plants, and where the concentrations are not so large that the nutrients and the tracers are washed out into the ground water resulting in pollution of this.

When the liquid fertiliser contains the macronutrient phosphorus, phosphorus can e.g. be from phosphoric acid and/or ammoniumpolyphophate. Among other things, phosphorus stimulates the root formation and root growth, and a careful dosing of phosphorus is important in e.g. beet growing and potato growing.

When the liquid fertiliser contains the macronutrient potassium, potassium can e.g. be from potassium phosphate, potassium thiosulphate, potassium chloride, and/or potassium nitrate. Potassium deficiency reduces the sugar content in the plant and increases the risk of damaging frost and cold effects on the plant. On the other hand, overdosing of potassium can affect the absorption of other nutrients such as magnesium, resulting in magnesium deficiency. A careful dosing of potassium is therefore very important.

When the liquid fertiliser contains the macronutrient sulphur, sulphur can e.g. be from ammonium thiosulphate, ammonium sulphate and/or sulphuric acid. Sulphur forms part of the amino acids that are the building blocks from which proteins are constructed, and sufficient quantities of sulphur is necessary for the growth of the plants.

When the liquid fertiliser contains nutrients in which Zn, Mg, Na, Ca, Mn, Cu, B, Fe, Co and/or Mo enter, these elements can advantageously enter as chelates, sulphates and/or carbonates.

The liquid fertiliser can be added a nitrogen source which advantageously can be urea, ammonia, an ammonium compound or a nitrate salt.

When the liquid fertiliser is of the above type, the dissolution is a true dissolution that does not precipitate at temperatures higher than or equal to -10°. The need for special storage conditions and storage conditions can therefore be limited considerably resulting in large economical savings.

The liquid fertiliser can advantageously have a pH value between 4 and 8. By making soil analyses, the soils pH value is obtained. If these analyses show that the pH value is not optimum for the growth of the plants, this pH value can simply be adjusted by means of the liquid fertiliser according to the invention so that the soil again will provide optimum pH conditions for the growth of the plants.

When the fertiliser is used for treating moss in lawns, the liquid fertiliser can advantageously have a pH value which is lower than or equal to 0.6. Such a pH value can e.g. be obtained by addition of sulphuric acid. The moss in the lawn will be removed by the acid, and light and air can subsequently penetrate into the grass which, by aid of the other nutrients in the fertiliser, thereby has been provided with favourable growth conditions.

In liquid fertilisers, a great part of the nitrogen is in form of amide nitrogen, e.g. as urea which easily is hydrolysed to the volatile ammonia.

By adding at least one nitrogen inhibitor chosen among the thiosulphate, dicyandiamide and/or acid groups, the nitrogen content of the liquid fertiliser be found both as amide nitrogen and as ammonium. Fruit juice in itself acts as inhibitor owing to its low pH value.

By adding the above-mentioned elements alone or in combination with each other, e.g. as part of a salt, or by mixing the elements or the salts of these, the liquid fertiliser according to this invention can be manufactured to supply the individual nutrient need of different plants.

In liquid fertilisers manufactured in accordance with the above specific nutrient needs, the total nitrogen content of the liquid fertiliser can be up to 30% of the liquid fertiliser, especially between 1% and 20%, the phosphorus content can be up to 10% of the liquid fertiliser, especially between 1% and 5%, the potassium content can be up to 15% of the liquid fertiliser, especially between 4% and 10%, the sulphur content can be up to 15% of the liquid fertiliser, especially between 1% and 10%, the magnesium content can be up to 10% of the liquid fertiliser, especially between 0.5% and 5%, the sodium content can be up to 8% of the liquid fertiliser, especially between 0.5% and 4%, the calcium content can preferably be up to 5% of the liquid fertiliser, especially between 0.5% and 2%, the magnium content can be up to 8% of the liquid fertiliser, especially between 0.5% and 4%, the copper content can be up to 8% of the liquid fertiliser, especially between 0.5% and 4%, the boron content can be up to 8% of the liquid fertiliser, especially between 0.5% and 4%, the iron content can preferably be up to 8% of the liquid fertiliser, especially between 0.5% and 4%, the zinc content can be up to 8% of the liquid fertiliser, especially between 0.5% and 4%, the cobalt content can be up to 2% of the liquid fertiliser, especially between 0.001% and 1%, and the molybdenum content can be up to 2% of the liquid fertiliser, especially between 0.001% and 1%.

In an advantageous embodiment of the present invention, the aqueous solution of fruit juice can advantageously and inexpensively be bought as surplus or waste products from industries that utilise plants such as fruits and vegetables in their daily production. During periods where these industries are unable to deliver sufficient quantities of fruit juice, carbohydrate can in stead be added to the fertiliser in powder form.

In the following, a few examples of liquid fertiliser according to the present invention are given. These examples are in no way meant to limit the present invention but only serve as exemplary embodiments.

All the below-mentioned examples of liquid fertiliser is manufactured in batches in an open vat, the size of which is preferably between 5,000 - 10,000 1. The mixing can be done in any order but most preferably, the mixing is done in the following order: Fruit juice is heated to 50°C after which potassium, urea, phosphorus and sulphur are added in the mentioned order. The rest of the fertiliser components are added last in random order. The fruit juice can from the start have any temperature at all but heating facilitates the solubility of the dry parts and therefore reduces the production time.

### Example 1:

| **Component** | **Quantity g** |
|---|---|
| Potassium chloride | 175 |
| Urea | 127 |
| Ammonium thiosulphate | 67 |
| Fruit juice (molasses, beet) | 20 |
| Fruit juice (potato juice) | 611 |
| End pH 5.75, density 1.2, carbohydrate content about 1.0% | |

Great demands are made on the uniformity of the grass layer on e.g. golf courses. The grass on golf courses is often cut usually quite short.

The liquid fertiliser in example 1 is especially suited for use in the summer for priming such large grass areas which are provided with 25-35kg/100 m².

### Example 2:

| **Component** | **Quantity g** |
|---|---|
| Potassium chloride | 135 |
| Ammonium polyphosphate | 113 |
| Ammonium thiosulphate | 224 |
| Fruit juice (molasses, beet) | 20 |
| Fruit juice (potato juice) | 508 |
| End pH 5.89, density 1.2, carbohydrate content about 1.0% | |

The liquid fertiliser in example 2 has a high potassium content in proportion to the nitrogen content and is therefore especially suited for use in autumn where the plants need extra potassium.

This fertiliser is spread in a quantity of about 12kg/100m².

### Example 3:

| **Component** | **Quantity g** |
|---|---|
| Potassium chloride | 175 |
| Urea | 117 |
| Ammonium polyphosphate | 47 |
| Ammonium thiosulphate | 67 |
| Fruit juice (molasses, beet) | 20 |
| Fruit juice (potato juice) | 574 |
| End pH 6.05, density 1.2, carbohydrate content about 1.0% | |

The liquid fertiliser in this example has a clear, red colour which makes it easy to follow the fertiliser content in the supply tank on the fertiliser distributor. The fertiliser is used as the liquid fertiliser in example 1 and can furthermore advantageously be used in combination with the liquid fertiliser in example 1.

### Example 4:

| **Component** | **Quantity g** |
|---|---|
| Potassium chloride | 40.2 |
| Urea | 35.9 |
| Ammonium polyphosphate | 46.9 |
| Potassium nitrate | 44.7 |
| Magnesium sulphate | 6.0 |
| Copper sulphate | 0.2 |
| Zinc nitrate | 0.137 |
| Solubor | 0.385 |
| Sodium molybdate | 0.021 |
| Fruit juice (molasses, beet) | 20.0 |
| Fruit juice (potato juice) | 805.8 |
| pH 6.38, density 1.1, carbohydrate content about 1.0% | |

The liquid fertiliser in this example is compounded in order to manufacture a fertiliser that can provide ideal conditions for plant growth in greenhouses.

Fertilisers of this type are typically used in a greenhouse where app. 5 1 are used for a greenhouse of app. 10m².

### Example 5:

| **Component** | **Quantity g** |
|---|---|
| Potassium chloride | 94 |
| Urea | 146 |
| Ammonium polyphosphate | 50 |
| Sulphuric acid | 90 |
| Fruit juice (molasses, beet) | 20 |
| Fruit juice (potato juice) | 600 |
| End pH 0.5, density 1.2, carbohydrate content about 1.0% | |

The liquid fertiliser in example 5 is especially suited for priming large moss areas in lawns.

This fertiliser is spread in a quantity of app. 2.5kg/100 m², and the treatment is repeated if necessary.

## Claims

1. A fertiliser of the kind that consists of an aqueous solution of at least one inorganic component, **characterised** in that the aqueous solution has a content of at least one juice from at least one part of a plant.

2. A fertiliser according to claim 1, **characterised** in that the plant is chosen among potato plant, apple tree, sugar beet, and sugar cane.

3. A fertiliser according to claim 1 or 2, **characterised** in that the aqueous solution is furthermore added at least one carbohydrate.

4. A fertiliser according to claim 1, 2, or 3, **characterised** in that the at least one inorganic component contains at least one element chosen among N, P, K, Zn, S, Mg, Na, Ca, Mn, Cu, B, Fe, Co, and Mo.

5. A fertiliser according to claim 1 - 4, **characterised** in that a nitrogen sources is added as urea, ammonia, ammonium compound or nitrate salt.

6. A fertiliser according to claim 1 - 5, **characterised** in that the fertiliser does not precipitate at temperatures higher than or equal to -10°C.

7. A fertiliser according to claim 1 - 6, **characterised** in that the fertiliser has a pH value between 4 and 8.

8. A fertiliser according to claim 1 - 6, **characterised** in that the fertiliser has a pH value which is lower than or equal to 0.6.

9. A fertiliser according to claim 1 - 8, **characterised** in that the fertiliser comprises at least one nitrogen inhibitor which is chosen from the group consisting of thiosulphate, dicyandiamide and acid.

10. A fertiliser according to claim 1 - 9, **characterised** in that the element concentration in the at least one inorganic component is less than 30% when the element is N, especially between 1% and 20%,
less than 10 when the element is P, especially between 1% and 5%,
less than 15% when the element is K, especially between 4% and 10%,
less than 15% when the element is S, especially between 1% and 10%,
less than 10% when the element is Mg, especially between 0.5% and 5%,
less than 8% when the element is Na, especially between 0.5% and 4%,
less than 5% when the element is Ca, especially between 0.5% and 2%,
less than 8% when the element is Mn, especially between 0.5% and 4%,
less than 8% when the element is Cu, especially between 0.5% and 4%,
less than 8% when the element is B, especially between 0.5% and 4%,
less than 8% when the element is Fe, especially between 0.5% and 4%,
less than 8% when the element is Zn, especially between 0.5% and 4%,
less than 2% when the element is Co, especially between 0.001% and 1%,
less than 2% when the element is Mo, especially between 0.001% and 1%,
